# EUROPÄISCHE PATENTSCHRIFT

(11) **EP 1 847 079 B1**
(45) Veröffentlichungstag und Bekanntmachung des Hinweises auf die Patenterteilung: **30.07.2008**
(21) Anmeldenummer: 06706403.0
(22) Anmeldetag: 25.01.2006
(51) Int. Cl.: H04L 12/56

(54) **SYSTEM UND VERFAHREN ZUR ÜBERWACHUNG VON GRUPPIERTEN OBJEKTEN**
SYSTEM AND METHOD FOR MONITORING GROUPED OBJECTS
SYSTEME ET PROCEDE POUR SURVEILLER DES OBJETS GROUPES

(30) Priorität: 25.01.2005 DE 102005003474; 12.08.2005 DE 102005038244
(43) Veröffentlichungstag der Anmeldung: 24.10.2007
(73) Patentinhaber: Fraunhofer-Gesellschaft zur Förderung der angewandten Forschung e.V., 80686 München (DE)
(72) Erfinder: HUPP, Jürgen, 90425 Nürnberg (DE); GEHRMANN, Volker, 91054 Erlangen (DE); PFLAUM, Alexander, 91054 Erlangen (DE)
(74) Vertreter: Gagel, Roland
(86) Internationale Anmeldenummer: PCT/EP2006/000642
(87) Internationale Veröffentlichungsnummer: WO 2006/079521

(56) Entgegenhaltungen:
- EP-A- 1 246 094
- EP-A- 1 324 540
- WO-A-98/48396
- US-A- 5 565 858

## Beschreibung

### Technisches Anwendungsgebiet

Die vorliegende Erfindung betrifft ein System sowie ein Verfahren zur Überwachung von gruppierten Objekten, insbesondere von Gütern oder Transportbehältern (z.B. Container) in logistischen Systemen, bei dem zumindest ein Gateway und mehrere an den Objekten anbringbare Funkknoten eingesetzt werden.

In logistischen Systemen sind Güter- und Informationsfluss bisher in der Regel ungenügend verknüpft. Schwund und Diebstahl in den Distributionssystemen der Wirtschaft, Out-of-Stock-Situationen im Handel, Betrug bei Verkauf von Schmuck und hochwertigen Kleidungsstücken, hohe und unverkäufliche Restbestände in der Lebensmittelindustrie und eine oft miserable Qualität der Daten in logistischen Informationssystemen sind die Folge. Der Einsatz von Begleitpapieren, von Barcodes und RFID (Radio Frequenzy Identification) konnten diese Probleme bisher nur teilweise lösen.

### Stand-der Technik

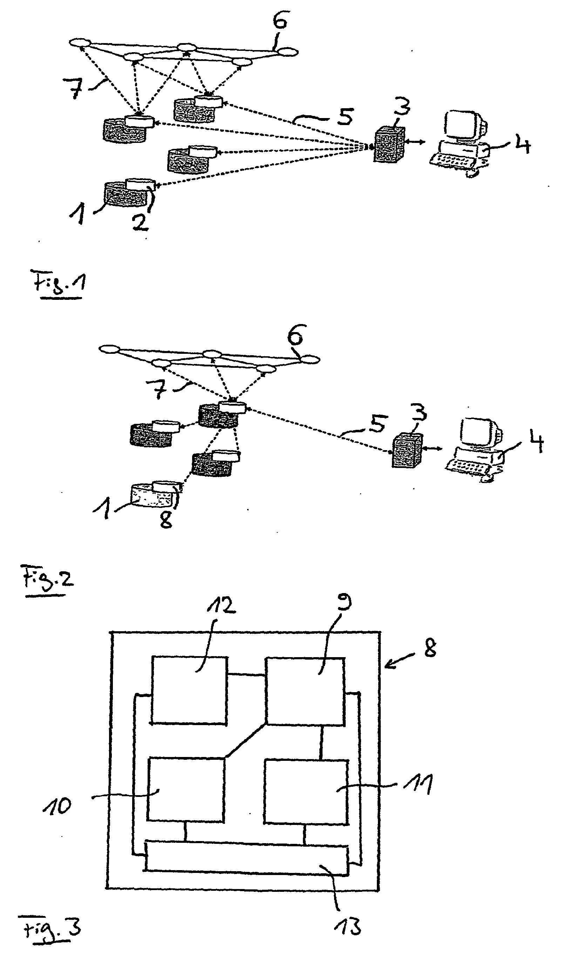

Zur Überwachung von gruppierten Objekten in logistischen Systemen ist es bekannt, einfache Transponder an den Objekten anzubringen, die in der Lage sind, über ein entferntes Gateway mit einem übergeordneten Informationssystem zu kommunizieren. Figur 1 zeigt schematisiert ein derartiges System mit den an den Objekten 1 angebrachten Transpondern 2, dem Gateway 3 sowie dem Informationssystem 4. Die Verbindung zwischen den Transpondern 2 und dem Gateway 3 erfolgt über ein drahtloses Medium. Die Kommunikation 5 ist in der Figur angedeutet. Bei geringen Entfernungen und Anforderungen, so bspw. bei der Identifikation von Paletten und Umverpackungen mit Hilfe sog. Smartlabel, verfügen die Transponder 2 über keinerlei Energiespeicher und entziehen die für die Kommunikation 5 notwendige Energie direkt einem durch eine Basisstation erzeugten magnetischen oder elektromagnetischen Feld. Bei größeren Entfernungen zwischen den Transpondern 2 und dem Gateway 3 sind allerdings Batterien oder Akkumulatoren für den Betrieb der Transponder 2 und die Kommunikation 5 erforderlich. Wird die genaue Position der logistischen Objekte 1 im Informationssystem 4 benötigt, so muss jedes einzelne Objekt 1 mit Hilfe einer geeigneten Lokalisierungsinfrastruktur 6 eine Ortsbestimmung vornehmen und die Positionsdaten drahtlos an das Gateway 3 senden.

Bei einem derartigen System treten zahlreiche Probleme auf, die einen praktischen Einsatz in logistischen Systemen bisher behinderten. So können sich die einzelnen Objekte 1 einander funktechnisch abschatten, so dass eine ungestörte Kommunikation mit dem Gateway 3 und die in vielen Fällen erforderliche 100%ige Kommunikationssicherheit nicht mehr gewährleistet sind. Ebenso wird durch die funktechnische Abschattung eine Lokalisierung behindert, bspw. beim Stapeln von Containern im Schiffsrumpf wenn über Satellitennavigation lokalisiert werden soll. Da jedes einzelne Objekt 1 über vergleichsweise große Entfernungen mit dem Gateway 3 kommunizieren muss, werden vor allem bei räumlich stark verteilten Anwendungen sehr hohe Kommunikationskosten verursacht. Die Verwendung von Energiespeichern erfordert während der Nutzungsdauer wiederholt teure Wartungsprozesse zum Auswechseln der Batterie oder zum Laden der Akkus. Der Energievorrat ist in vielen Fällen aus Anwendungssicht zu schnell erschöpft.

Für einen lückenlosen Informations- und Güterfluss ist es erforderlich, dass Objekt und Informationssystem jederzeit kommunizieren können, die Identität und der Zustand des einzelnen Objekts in dem Informationssystem jederzeit bekannt sind und die Position des Objekts ebenfalls aktuell in den Datenstrukturen hinterlegt ist. Diese Forderung kann zwar prinzipiell durch Anbringen von mikroelektronischen Bausteinen wie die bereits genannten aktiven Transponder an den Objekten realisiert werden. Der breite Einsatz derartiger mikroelektronischer Bausteine in der Praxis wird durch den bereits oben angeführten hohen Energieverbrauch bei begrenztem Energievorrat jedoch behindert.

Die US 5,565,858 beschreibt ein Überwachungssystem mit Funkknoten, das speziell für gestapelte Container ausgebildet ist. Die einzelnen Funkknoten umfassen eine Fernbereichskommunikationseinheit und eine Nahbereichskommunikationseinheit. Jede Nahbereichskommunikationseinheit ist so ausgebildet, dass sie ausschließlich mit der unmittelbar benachbarten Fernbereichskommunikationseinheit kommunizieren kann. Die Kommunikation mit einer Abfrageeinheit erfolgt bei diesem System immer durch den obersten Funkknoten in dem Containerstapel , dem sog. Master-Funkknoten, während die anderen Funkknoten als Slave-Funkknoten fungieren. Der oberste Funkknoten in einem Stapel zeichnet sich bei diesem System dadurch aus, dass er eine Fernbereichsantenne aufweist, die nicht in Reichweite einer Nahbereichsantenne eines benachbarten Funkknotens ist. Die Bestimmung dieses Master-Funkknotens ergibt sich somit allein aus der gegenseitigen räumlichen Anordnung der Funkknoten. Durch Prüfung der Kommunikationsmöglichkeiten kann dann jeder einzelne Funkknoten erkennen, ob er ein Master-Funkknoten oder ein Slave-Funkknoten ist. Es kann dadurch allerdings vorkommen, dass der sich ergebende Master-Funkknoten gerade nicht optimal für Ausübung seiner Funktion geeignet ist, bspw. einen zu geringen Energievorrat aufweist. Dies erfordert dann eine entsprechende Wartung des Systems. Ein Hinweis auf eine Möglichkeit der Verringerung von Wartungsintervallen der eingesetzten Funkknoten findet sich in dieser Druckschrift nicht.

Die Aufgabe der vorliegenden Erfindung besteht darin, ein System sowie ein Verfahren zur Überwachung von gruppierten Objekten anzugeben, das sich zur Überwachung von Gütern in logistischen Systemen eignet und geringere Wartungsintervalle erfordert.

### Darstellung der Erfindung

Die Aufgabe wird mit dem System sowie dem Verfahren gemäß den Patentansprüchen 1 und 9 gelöst. Vorteilhafte Ausgestaltungen des Systems sind Gegenstand der Unteransprüche oder lassen sich der nachfolgenden Beschreibung sowie den Ausführungsbeispielen entnehmen.

Das vorliegende System besteht aus mehreren neuartigen Funkknoten, die die bisher verwendeten einfachen elektronischen Etiketten oder Transponder ersetzen. Die Funkknoten setzen sich aus einer zentralen Recheneinheit, einer Nahbereichskommunikationseinheit sowie einer für den Betrieb des Funkknotens erforderlichen Energieversorgungseinheit, bspw. einer Batterie oder einem Akkumulator, zusammen. Zumindest einer der Funkknoten oder das Gateway umfassen eine Lokalisierungseinheit. Weiterhin weist optional zumindest einer der Funkknoten eine Fernbereichskommunikationseinheit auf.

Unter einem Funkknoten wird hierbei ein mikroelektronisches Bauteil verstanden, das die genannten Einheiten aufweist. Die Nahbereichs- und die Fernbereichskommunikationseinheit sind für eine drahtlose Kommunikation mit anderen Funkknoten des Systems und einem zum System gehörenden Gateway ausgebildet. Unter einer Nahbereichskommunikation werden hierbei drahtlose Übertragungstechniken wie bspw. Bluetooth oder Zigbee verstanden. Fernbereichskommunikation ermöglicht eine drahtlose Kommunikation über größere Distanzen, bspw. mittels GSM oder UMTS.

Die Funkknoten werden an die einzelnen Objekte angebracht, die überwacht werden sollen. Die Recheneinheit in dem jeweiligen Funkknoten verfügt über zumindest ein Steuerungsprogramm für eine Abarbeitung vorgegebener Aufgaben im jeweiligen Funkknoten. Das auf den Funkknoten installierte Steuerungsprogramm ermöglicht die bidirektionale Kommunikation zwischen den einzelnen Funkknoten über die Nahbereichskommunikationseinheit zur Bildung eines Ad-hoc-Netzwerkes sowie zwischen den Funkknoten und dem Gateway über die Nahbereichs- oder Fernbereichskommunikationseinheit. Die Bildung des Ad-hoc-Netzwerkes erfolgt dabei über ein geeignetes Protokoll. Selbstvernetzende Funknetzwerke mit derartigen Funkknoten sind aus anderen Bereichen, insbesondere dem Gebiet der verteilten Sensornetzwerke, bekannt . Als standardisiertes, stromsparendes Übertragungsprotokoll kann innerhalb des Funknetzwerkes beispielsweise Zigbee oder TinyOS der Universität von Kalifornien, Berkeley, eingesetzt werden. Selbstverständlich eignen sich für die Übertragung innerhalb des Funknetzwerkes jedoch auch andere Netzwerkprotokolle. Bei Bedarf kann auch die Nutzung der Fernbereichskommunikationseinheit für einen Teil der bidirektionalen Kommunikation zwischen den Funkknoten zur Bildung des Ad-hoc-Netzwerkes eingesetzt werden. Der zum System gehörende Gateway hat ebenso wie bei dem eingangs beschriebenen bekannten System des Standes der Technik die Funktion einer Basisstation, die die Verbindung zum Informationssystem herstellt. Diese Verbindung kann sowohl drahtlos als auch drahtgebunden erfolgen. Die Rolle des Gateways kann auch von einem der Funkknoten erfüllt werden.

Das Steuerungsprogramm ist bei dem vorliegenden System zur Steuerung eines Abstimmungsprozesses zwischen den Funkknoten ausgebildet, bei dem einer der Funkknoten für die Abarbeitung einer der vorgegebenen Aufgaben ausgewählt wird, der für die Aufgabe nach vorgegebenen Kriterien jeweils momentan am besten geeignet ist. Dies betrifft vor allem die Aufnahme der Verbindung mit dem Gateway, die vorzugsweise jeweils von dem Funkknoten aus erfolgt, der momentan den größten Energievorrat oder die besten Empfangsbedingungen aufweist. Der Abstimmungsprozess zwischen den Funkknoten kann dabei in vorgebbaren Zeitabständen, zu vorgebbaren Zeiten und/oder auf eine über den Gateway erhaltene Anforderung hin und/oder bei einem durch einen der Funkknoten über eine eingebaute Detektionseinheit erkannten Ereignis durchgeführt werden. Bei einer derartigen Anforderung kann es sich bspw. um die Anforderung einer Lokalisationsinformation oder einen Befehl zur Durchführung einer bestimmten Aufgabe handeln.

Bei dem vorliegenden Verfahren zur Überwachung von gruppierten Objekten wird das beschriebene System eingesetzt, indem die Funkknoten an den Objekten befestigt und zur Bildung von Ad-hoc-Netzwerken initialisiert werden. Durch diese Vernetzung von nahe beieinander befindlichen Objekten wird ein Cluster gebildet. Innerhalb dieses Clusters übernimmt nach dem jeweiligen Abstimmungsprozess der Funkknoten, der nach vorgegebenen Kriterien für die jeweilige Aufgabe am besten geeignet ist, stellvertretend für alle anderen Funkknoten die Durchführung dieser Aufgabe. Hierbei kann es sich um die Aufrechterhaltung der Kommunikation zum Gateway, um die Bestimmung der Position über die Lokalisierungseinheit oder auch um andere Aufgaben handeln. So kann bspw. nach dem Abstimmungsprozess der Funkknoten mit dem größten Energievorrat die Aufgabe übernehmen, die Position des Clusters stellvertretend für alle anderen Funkknoten zu bestimmen und das Resultat wiederum stellvertretend für alle über den Gateway an das Informationssystem weiterzureichen. Für die meisten logistischen Anwendungen genügt die Position des Clusters. Die genaue Position jedes einzelnen Objekts innerhalb des Clusters ist nur in einigen Spezialfällen, bspw. zur Diebstahlsicherung, erforderlich.

Das vorliegende System sowie das zugehörige Verfahren steigern die Transparenz physischer Güterflüsse in logistischen Systemen. Durch das System werden Wartungs- und Betriebskosten von mit Transponder arbeitenden Tracking- und Tracing-Systemen reduziert und deren technische Leistung, insbesondere die Lesesicherheit, verbessert. So wird durch die kleinräumige Vernetzung durch Bildung des Ad-hoc-Netzwerkes das Problem der funktechnischen Abschattung gelöst. Die Lesesicherheit wird im Gegensatz zu den eingangs beschriebenen mit Transpondern arbeitenden Systemen deutlich erhöht, da die Kommunikation über kürzere Entfernungen erfolgt und keine Materialdurchdringungsproblematik auftritt. Durch die Clusterung und Verlagerung energieintensiver Prozesse wie die Positionsbestimmung und die Fernbereichskommunikation auf den Funkknoten, der momentan über die größten Energiereserven verfügt, sinkt der Energieverbrauch im Gesamtsystem deutlich und gleichmäßig. Das Ansparpotential steigt mit der Anzahl der Objekte in den einzelnen Clustern. Durch dieses Konzept, bei dem die Funkknoten die anstehenden Aufgaben gemeinsam lösen, werden Wartungsintervalle, insbesondere hinsichtlich der Energieversorgung, deutlich verlängert, so dass Prozesskosten eingespart werden. Das Gleiche gilt auch für die Einsparung der Kommunikationskosten durch Verlagerung teurer Kommunikationsaktivitäten auf einen stellvertretend für alle agierenden Funkknoten.

Neben den bisher genannten Aufgaben, wie die Kommunikation mit dem Gatewayknoten oder die Positionsbestimmung, können selbstverständlich auch weitere Aufgaben durch Implementierung von Softwaremodulen in die Recheneinheiten durch die einzelnen Funkknoten erledigt werden. Dies betrifft bspw. die Erfassung von Sensordaten, falls die Funkknoten über entsprechende Sensoren für die Detektion eines momentanen Zustandes, bspw. der Temperatur, verfügen. Weiterhin können Teile logistischer Anwendungssoftware auf die Funkknoten verlagert werden, um auf diese Weise die Komplexität ausgedehnter logistischer Informationssysteme zu reduzieren.

Das System sowie das zugehörige Verfahren lassen sich für alle gruppierten, d. h. in räumlicher Nähe angeordneten Objekte, vorzugsweise jedoch für Güter in logistischen Systemen einsetzen. Hierbei kann es sich bspw. um die Verfolgung von Fahrzeugen, von Wechselbehältern und Containern, von Lade- und Transporthilfsmitteln, von Umverpackungen, Produkten und anderen logistischen Objekten handeln.

Das vorliegende System kann sich auch aus unterschiedlichen Funkknoten zusammensetzen, von denen nur ein Teil eine Fernbereichskommunikationseinheit aufweist. In diesem Fall wird beim Abstimmungsprozess innerhalb eines Clusters nur einem der Funkknoten die Aufgabe zur Fernbereichskommunikation erteilt, der über eine entsprechende Einheit verfügt. Weiterhin können selbstverständlich anstelle des Energievorrats auch andere Kriterien für die Auswahl des geeigneten Funkknotens für die jeweilige Aufgabe innerhalb des Clusters herangezogen werden, bspw. die beste Empfangsqualität für die Verbindung mit einem Gateway. Durch das jeweils erneute Anstoßen des Abstimmungsprozesses für die unterschiedlichen Aufgaben zu unterschiedlichen Zeiten werden die einzelnen Aufgaben nicht immer vom gleichen Funkknoten gelöst, sondern jeweils von dem, der zum Zeitpunkt des Abstimmungsprozesses gerade am besten geeignet ist.

### Kurze Beschreibung der Zeichnungen

Das vorliegende System sowie das zugehörige Verfahren werden nachfolgend anhand eines Ausführungsbeispiels in Verbindung mit den Zeichnungen ohne Beschränkung des durch die Patentansprüche vorgegebenen Schutzbereichs nochmals kurz erläutert. Hierbei zeigen:
- Fig. 1: schematisch ein Beispiel ein System gemäß dem Stand der Technik;
- Fig. 2: schematisch ein Beispiel für den Aufbau des vorliegenden Systems; und
- Fig. 3: schematisch den Aufbau eines einzelnen Funkknotens des vorliegenden Systems.

### Wege zur Ausführung der Erfindung

Im vorliegenden Ausführungsbeispiel werden das System und das Verfahren für das Management von leeren Wechselbrücken in logistischen Netzen eingesetzt. Heutzutage sind auf Transpondern basierende Systeme verfügbar, bei denen sich die Transponder aus einer GPS-, einer GSM- und einer Recheneinheit zusammensetzen. Diese Transponder bestimmen in festen zeitlichen Abständen ihre Position und geben die resultierende Ortsinformation an eine Zentrale weiter. Hier erfolgt die Disposition der Wechselbrücken entsprechend dem aktuellen Bedarf im Gesamtsystem. Hoher Energieverbrauch, Wartungskosten und Kommunikationskosten verhindern jedoch derzeit einen breiten Einsatz eines derartigen Systems.

Da die Wechselbrücken in Depots sowie auf Lkw- und Schienenzügen verglichen mit der räumlichen Ausdehnung logistischer Systeme relativ eng beieinander stehen, kann das vorliegende System für eine derartige Aufgabe eingesetzt werden. Die vorliegenden Funkknoten unterscheiden sich hierbei von den oben genannten Transpondern dadurch, dass sie zusätzlich zur GPS-Einheit 12 für die Lokalisierung, der GSM-Einheit 11 zur Fernbereichskommunikation und zur Recheneinheit 9 über eine Nahbereichskommunikationseinheit 10, im vorliegenden Beispiel einer Bluetooth-Einheit, verfügen. Der schematische Aufbau eines derartigen Funkknotens 8 ist aus der Figur 3 ersichtlich, die auch den Akkumulator 13 zur Energieversorgung andeutet.

Diese Funkknoten werden an den Wechselbrücken angebracht, die im vorliegenden Beispiel die zu überwachenden Objekte 1 darstellen. Das Gesamtsystem ist schematisiert in Figur 2 dargestellt, in der die Objekte 1 mit den Funkknoten 8, der Gateway 3 sowie das Informationssystem 4 erkennbar sind. Die Lokalisierungsinfrastruktur 6 für die Lokalisierung 7 eines einzelnen Funkknotens 8 wird im vorliegenden Beispiel durch vorhandene GPS-Satelliten bereitgestellt. Die Kommunikation 5 mit dem Gateway erfolgt bei diesem System jeweils nur durch einen der Funkknoten 8, der vorher in einer bidirektionalen Kommunikation zwischen den einzelnen Funkknoten 8 in einem Abstimmungsprozess ausgewählt wurde.

Von der Zentrale mit dem Informationssystem 4 werden die Funkknoten 8 einmal pro Tag durch eine Broadcasting-Nachricht über den Gateway 3 aufgefordert, ihre Position zu melden. Jeder Funkknoten 8 nimmt über die Nahbereichskommunikationseinheit 10 dann Kontakt zu möglichen Nachbarknoten auf. Nach einer Clusterbildung durch Vernetzung aller erreichbaren Knoten erfolgt ein Abstimmungsprozess in jedem der gebildeten Cluster. Die Cluster können hierbei auf Betriebshöfen, Schienen- und Lkw-Zügen entstehen. Dem Funkknoten mit dem größten Energievorrat wird in dem Cluster gemeinschaftlich die Aufgabe erteilt, die Position des Clusters stellvertretend mit Hilfe der integrierten Lokalisierungseinheit, der GPS-Einheit 12, zu bestimmen und über die GSM-Einheit 11 an das zentrale Informationssystem 4 zu melden. Hier kann dann die Disposition erfolgen. Bis zur nächsten Broadcasting-Nachricht wechseln sämtliche Funkknoten 8 in den Stand-by-Betrieb. Die Energieeinsparungseffekte können bei einem derartigen System beträchtlich sein. Vor allem auf Betriebshöfen, auf denen Cluster 100 und mehr Objekte beinhalten können, ist mit beträchtlichen Energie- und Kosteneinsparungen zu rechnen.

### Bezugszeichenliste

- 1: Objekt
- 2: Transponder
- 3: Gateway
- 4: Informationssystem
- 5: Kommunikation
- 6: Lokalisierungsinfrastruktur
- 7: Lokalisierung
- 8: Funkknoten
- 9: Recheneinheit
- 10: Nachbereichskommunikationseinheit
- 11: GSM-Einheit
- 12: GPS-Einheit
- 13: Akkumulator

## Patentansprüche

1. System zur Überwachung von gruppierten Objekten (1), insbesondere von Gütern in logistischen Systemen, mit zumindest einem Gateway (3) und mehreren an den Objekten (1) anbringbaren Funkknoten (8), die zumindest jeweils eine Recheneinheit (9), eine Nahbereichskommunikationseinheit (10) für eine drahtlose Kommunikation mit anderen Funknoten (8) des Systems und dem Gateway (3) und eine Energieversorgungseinheit (13) aufweisen,
- wobei zumindest einer der Funkknoten (8) oder das Gateway (3) eine Lokalisierungseinheit (12) und optional zumindest einer der Funkknoten (8) eine Fernbereichskommunikationseinheit (11) aufweisen,
- wobei die Recheneinheit (9) zumindest ein Steuerungsprogramm für eine Abarbeitung vorgegebener Aufgaben in den Funkknoten (8) enthält, das
- zur Steuerung einer bidirektionalen Kommunikation zwischen den Funkknoten (8) über die Nahbereichskommunikationseinheit (10) zur Bildung eines Ad-hoc-Netzwerkes und zwischen den Funkknoten (8) und dem Gateway (3) über die Nahbereichs- und/oder Fernbereichskommunikationseinheit (11) und
- zur Steuerung eines Abstimmungsprozesses zwischen den Funkknoten (8) ausgebildet ist, der in vorgebbaren Zeitabständen oder zu vorgebbaren Zeiten und/oder auf eine über das Gateway (3) erhaltene Anforderung hin und/oder bei einem durch einen der Funkknoten (8) erkannten Ereignis durchgeführt wird und bei dem einer der Funkknoten (8) für die Abarbeitung einer der vorgegebenen Aufgaben ausgewählt wird, der für die Aufgabe nach vorgegebenen Kriterien momentan am besten geeignet ist.

2. System nach Anspruch 1,
**dadurch gekennzeichnet,**
**dass** das Steuerungsprogramm für die Steuerung des Abstimmungsprozesses derart ausgebildet ist, dass für die Kommunikation mit dem Gateway (3) als vorgegebene Aufgabe der Funknoten (8) mit dem größten Energievorrat ausgewählt wird.

3. System nach Anspruch 1,
**dadurch gekennzeichnet,**
**dass** das Steuerungsprogramm für die Steuerung des Abstimmungsprozesses derart ausgebildet ist, dass für die Kommunikation mit dem Gateway (3) als vorgegebene Aufgabe der Funknoten (8) mit den besten Empfangsbedingungen ausgewählt wird.

4. System nach einem der Ansprüche 1 bis 3,
**dadurch gekennzeichnet,**
**dass** das Steuerungsprogramm für die Steuerung des Abstimmungsprozesses derart ausgebildet ist, dass für eine Bestimmung einer Position mit der Lokalisierungseinheit (12) als vorgegebene Aufgabe der Funknoten (8) mit dem größten Energievorrat ausgewählt wird.

5. System nach einem der Ansprüche 1 bis 3,
**dadurch gekennzeichnet,**
**dass** das Steuerungsprogramm für die Steuerung des Abstimmungsprozesses derart ausgebildet ist, dass für eine Bestimmung einer Position mit der Lokalisierungseinheit (12) als vorgegebene Aufgabe der Funknoten (8) mit den besten Empfangsbedingungen ausgewählt wird.

6. System nach einem der Ansprüche 1 bis 5,
**dadurch gekennzeichnet,**
**dass** das Steuerungsprogramm Module zur Abarbeitung logistischer Aufgaben enthält.

7. System nach einem der Ansprüche 1 bis 6,
**dadurch gekennzeichnet,**
**dass** der Gateway (3) durch einen der Funkknoten (8) gebildet ist.

8. System nach einem der Ansprüche 1 bis 7,
**dadurch gekennzeichnet,**
**dass** die Funkknoten (8) Detektionseinheiten zur Überwachung der Objekte aufweisen.

9. Verfahren zur Überwachung von gruppierten Objekten (1), insbesondere von Gütern in logistischen Systemen, mit einem System nach einem der Ansprüche 1 bis 8, bei dem die Funkknoten (8) des Systems an den Objekten (1) angebracht und zur Bildung eines Ad-hoc-Netzwerkes initialisiert werden, und bei dem in vorgebbaren Zeitabständen oder zu vorgebbaren Zeiten und/oder auf eine über den Gateway (3) gesendete Anforderung hin und/oder bei einem durch einen der Funkknoten (8) erkannten Ereignis ein durch den Abstimmungsprozess ausgewählter Funkknoten (8) seine Position ermittelt und direkt oder über ein oder mehrere andere Funknoten (8) des Systems an den Gateway (3) übermittelt.

## Claims

1. A system for the monitoring of grouped objects (1), in particular of goods in logistical systems, with at least one gateway (3) and a plurality of radio nodes (8) attachable to the objects (1), which in each case have at least one computing unit (9), a short-range communications unit (10) for wireless communication with other radio nodes (8) of the system and with the gateway (3), and an energy supply unit (13),
- wherein at least one of the radio nodes (8) or the gateway (3) has a localisation unit (12) and optionally at least one of the radio nodes (8) has a long-range communications unit (11),
- wherein the computing unit (9) contains at least one control program for the processing of predetermined tasks in the radio nodes (8), that
- is designed for the control of bi-directional communications between the radio nodes (8) via the short-range communications unit (10) for the formation of an ad hoc network and between the radio nodes (8) and the gateway (3) via the short-range and/or long-range communications unit (11) and
- for the control of a tuning process between the radio nodes (8), which is executed at prescribable time intervals, or at prescribable times, and/or according to a requirement received via the gateway (3), and/or by an event detected by one of the radio nodes (8) and in which one of the radio nodes (8) is selected for the processing of one of the predetermined tasks, which node at that instant is best suited for the task according to predetermined criteria.

2. The system according to Claim 1,
**characterised in that** the control programme for the control of the tuning process is designed such that the radio node (8) with the largest energy reserve is selected for the communication with the gateway (3) as a predetermined task.

3. The system according to Claim 1,
**characterised in that** the control programme for the control of the tuning process is designed such that the radio node (8) with the best reception conditions is selected for the communication with the gateway (3) as a predetermined task.

4. The system according to one of the Claims 1 to 3,
**characterised in that** the control program for the control of the tuning process is designed such that the radio node (8) with the largest energy reserve is selected for determination of a position with the localisation unit (12) as a predetermined task.

5. The system according to one of the Claims 1 to 3,
**characterised in that** the control program for the control of the tuning process is designed such that the radio node (8) with the best reception conditions is selected for determination of a position with the localisation unit (12) as a predetermined task.

6. The system according to one of the Claims 1 to 5,
**characterised in that** the control program contains modules for the processing of logistical tasks.

7. The system according to one of the Claims 1 to 6,
**characterized in that** the gateway (3) is formed by one of the radio nodes (8).

8. The system according to one of the Claims 1 to 7,
**characterized in that** the radio nodes (8) have detection units for the monitoring of the objects.

9. A method for the monitoring of grouped objects (1), in particular of goods in logistical systems, with a system according to one of the Claims 1 to 8, in which the radio nodes (8) of the system are attached to the objects (1) and are initialised for the formation of an ad hoc network and in which at prescribable time intervals, at prescribable times, and/or according to a requirement received via the gateway (3), and/or by an event detected by one of the radio nodes (8) a radio node (8) selected by the tuning process determines its position and directly or via one or a plurality of other radio nodes (8) of the system transmits to the gateway (3).

## Revendications

1. Système de supervision d'objets groupés (1) notamment de produits dans des systèmes logistiques, avec au moins une passerelle (3) et plusieurs noeuds d'accès (8) susceptibles d'être montés sur les objets (1), comportant chacun une unité de calcul (9), une unité de communication à zone d'action locale (10) pour une communication sans fil avec d'autres noeuds d'accès (8) du système et avec la passerelle (3) et une unité d'alimentation en énergie (13),
- au moins l'un des noeuds d'accès (8) ou la passerelle (3) comportant une unité de localisation (12) et en option au moins l'un des noeuds d'accès (8) comportant une unité de communication à zone d'action lointaine (11),
- l'unité de calcul (9) comprenant au moins un programme de commande pour une exécution de tâches prédéfinies dans les noeuds d'accès (8), qui est conçu
- pour la commande d'une communication bidirectionnelle entre les noeuds d'accès (8) via l'unité de communication à zone d'action locale (10), pour la création d'un réseau ad-hoc et entre les noeuds d'accès (8) et la passerelle (3) via l'unité de communication à zone d'action locale et/ou l'unité de communication à zone d'action lointaine (11) et
- pour la commande d'un processus de syntonisation entre les noeuds d'accès (8), qui est réalisé à intervalles de temps prédéfinissables ou à des moments prédéfinissables et/ou sur une demande obtenue via la passerelle (3) et/ou lors d'un événement reconnu par l'un des noeuds d'accès (8) et lors duquel l'un des noeuds d'accès (8) qui est le mieux adapté pour la tâche selon des critères prédéfinis est sélectionné pour l'exécution de l'une des tâches prédéfinies.

2. Système selon la revendication 1,
**caractérisé en ce que** le programme de commande pour la commande du processus de syntonisation est conçu de sorte que, pour la communication avec la passerelle (3) en tant que tâche prédéfinie, le noeud d'accès (8) avec la plus grande réserve d'énergie est sélectionné.

3. Système selon la revendication 1,
**caractérisé en ce que** le programme de commande pour la commande du processus de syntonisation est conçu de sorte que, pour la communication avec la passerelle (3) en tant que tâche prédéfinie, le noeud d'accès (8) avec les meilleures conditions de réception est sélectionné.

4. Système selon l'une quelconque des revendications 1 à 3,
**caractérisé en ce que** le programme de commande pour la commande du processus de syntonisation est conçu de sorte que, pour une détermination d'une position avec l'unité de localisation (12) en tant que tâche prédéfinie, le noeud d'accès (8) avec la plus grande réserve d'énergie est sélectionné.

5. Système selon l'une quelconque des revendications 1 à 3, **caractérisé en ce que** le programme de commande pour la commande du processus de syntonisation est conçu de sorte que, pour une détermination d'une position avec l'unité de localisation (12) en tant que tâche prédéfinie, le noeud d'accès (8) avec les meilleures conditions de réception est sélectionné.

6. Système selon l'une quelconque des revendications 1 à 5, **caractérisé en ce que** le programme de commande comprend des modules pour l'exécution de tâches logistiques.

7. Système selon l'une quelconque des revendications 1 à 6, **caractérisé en ce que** la passerelle (3) est établie par l'un des noeuds d'accès (8).

8. Système selon l'une quelconque des revendications 1 à 7, **caractérisé en ce que** les noeuds d'accès (8) comportent des unités de détection pour la supervision des objets.

9. Procédé de supervision d'objets groupés (1), notamment de produits dans des systèmes logistiques, avec un système selon l'une quelconque des revendications 1 à 8, dans lequel on monte les noeuds d'accès (8) du système sur des objets (1) et on les initialise pour la création d'un noeud ad-hoc et dans lequel à des intervalles de temps prédéfinissables ou à des moments prédéfinissables et/ou sur une demande obtenue via la passerelle (3) et/ou lors d'un événement reconnu par l'un des noeuds d'accès, l'un des noeuds d'accès (8) sélectionné par le processus de syntonisation détermine sa position et la transmet directement ou via un ou plusieurs autres noeuds d'accès (8) du système vers la passerelle (3).
